# EUROPEAN PATENT SPECIFICATION

(11) **EP 2 876 135 B1**
(45) Date of publication and mention of the grant of the patent: **19.10.2022**
(21) Application number: 14192825.9
(22) Date of filing: 12.11.2014
(51) Int. Cl.: C08J 5/06, B29C 48/00

(54) **Method for making fiber-reinforced composition and a fiber-reinforced composite article**
Verfahren zur Herstellung einer faserverstärkten Zusammensetzung und eines faserverstärkten Artikels
Procédé de fabrication d'une composition renforcé en fibres et composites à fibres renforcées

(30) Priority: 22.11.2013 US 201314088066
(43) Date of publication of application: 27.05.2015
(73) Proprietor: Johns Manville, Denver, CO 80202 (US)
(72) Inventor: YOHANNES, Asheber, Littleton, CO Colorado 80128 (US); ZHANG, Mingfu, Highlands Ranch, CO Colorado 80130 (US); BLOCK, Michael J., Centennial, CO Colorado 80122 (US); GLEICH, Klaus Friedrich, Highlands Ranch, CO Colorado 80126 (US); ASRAR, Jawed, Englewood, CO Colorado 80111 (US)
(74) Representative: Dörr, Klaus

(56) References cited:
- EP-A1- 2 228 351
- EP-A1- 2 774 944
- US-A1- 2010 203 331
- US-A1- 2010 286 343

## Description

### BACKGROUND OF THE INVENTION

Thermoset plastics are favored for making many kinds of fiber-reinforced articles because of their ease of manufacture. Uncured thermosets are often low viscosity liquids at room temperature and easily wet a fabric of fibers. Once they have migrated through the fabric and surrounded its fibers, a curing stage (sometimes called a hardening stage) commences to polymerize the thermoset into a polymer matrix. Often, this wetting and curing takes place in a mold that defines the shape of the fiber-reinforced article.

The uncured thermoset resins used to make the composite are generally inexpensive, but often off-gas irritating and sometimes dangerous volatile organic compounds (VOCs). The outgassing of VOCs are of particular concern during curing, when the exothermic nature of many thermoset polymerization reactions raise the temperature of the composite and drive more VOCs into the gas phase. In many instances, it is necessary to cure large thermoset articles in facilities equipped with robust ventilation and air scrubbing equipment, increasing the overall production costs.

Thermoset articles are also difficult to repair or recycle. Hardened thermoset resins often have a high degree of crosslinking, making them prone to fractures and breaks. Because thermosets normally will not soften or melt under heat, they have to be replaced instead of repaired by welding. Compounding difficulties, the unrepairable thermoset part normally cannot be recycled into new articles, but must instead be landfilled at significant cost and adverse impact on the environment. The problems are particularly acute when large thermoset parts, such as automotive panels and wind turbine blades, need to be replaced.

Because of these and other difficulties, thermoplastic resin systems are being developed for fiber-reinforced articles that were once exclusively made using thermosets. Thermoplastics typically have higher fracture toughness and chemical resistance than thermosets. They also soften and melt at raised temperatures, allowing operators to heal cracks and weld together pieces instead of having to replace a damaged part. Perhaps most significantly, discarded thermoplastic parts can be broken down and recycled into new articles, reducing landfill costs and stress on the environment.

US-A-2010/203331, US-A-2010/286343 and EP2228351 disclose a method for making a fiber-reinforced composition and fiber reinforced composite articles, wherein a reactive composition comprising caprolactam and reactive glass fbers sized with a polymerisation activator or precursor and/or a coupling initiator compound are provided to the extruder, the caprolactam is polymerized inside the extruder and the composition is extruded to form the article.

Unfortunately, many thermoplastics also have production challenges, including high flow viscosities that cause difficulties loading and wetting the thermoplastic resin into the fibers. In some instances the melted thermoplastic is raised to high temperature, pulled into the fibers under high pressure, and if necessary under high vacuum, to increase the infiltration rate. At a minimum, these techniques increase the complexity and cost of producing the fiber-reinforced article and often result in a thermoplastic matrix that is poorly bonded to the reinforcing fibers. Thus, there is a need to develop new thermoplastic resin formulations and new ways to combine thermoplastic resins with reinforcing fibers. These and other issues are addressed in the present application.

### BRIEF SUMMARY OF THE INVENTION

Methods of making and using extruded fiber-resin compositions in the construction of fiber-reinforced composite articles are described. The present compositions include the combination of reactive resin compositions and reactive fibers. The reactive resin composition may be melted and combined with the reactive fibers in an extruder. The reactive fibers have been sized with one or more polymerization and/or coupling agents that promote the polymerization of the reactive resin composition and/or the bonding of the polymerized resin to the fibers. The low-viscosity reactive resin compositions are significantly easier to wet and mix with the fibers in an extruder compared to a melt of the polymerized thermoplastic resin.

Embodiments include methods of making fiber-resin compositions according to claim 1. The methods include providing a reactive resin composition to an extruder, where the reactive resin composition includes monomers and oligomers that are capable of polymerizing into a thermoplastic resin. The methods further include combining the reactive resin composition with a plurality of reactive fibers that are also supplied to the extruder. The plurality of reactive fibers are sized with at least one polymerization agent and/or coupling agent. The fiber-resin composition is extruded from the extruder, where the composition includes a thermoplastic resin in contact with the plurality of fibers that is formed by the polymerization of the monomers and oligomers of the reactive resin composition.

Embodiments further include methods of making a fiber-reinforced composite article according to claim 8 The methods include providing a reactive resin composition to an extruder, where the reactive resin composition includes monomers and oligomers that are capable of polymerizing into a thermoplastic resin. The methods further include combining the reactive resin composition with a plurality of reactive fibers that are also supplied to the extruder. The plurality of reactive fibers are sized with at least one of a polymerization agent and/or coupling agent. The fiber-resin composition is extruded from the extruder, where the composition includes a thermoplastic resin in contact with the plurality of fibers that is formed by the polymerization of the monomers and oligomers of the reactive resin composition. The extruded fiber-resin composition may be formed into the fiber-reinforced composite article using processes like injection molding or compression molding, among other processes.

Embodiments may yet further include exemplary fiber-resin compositions and fiber-reinforced composite articles made from the compositions. The exemplary fiber-resin compositions may be made from the reactive extrusion of a reactive resin and a plurality of reactive fibers. The fiber-reinforced composite articles may be made from fiber-resin compositions that form the article.

Additional embodiments and features are set forth in part in the description that follows, and in part will become apparent to those skilled in the art upon examination of the specification or may be learned by the practice of the invention. The features and advantages of the invention may be realized and attained by means of the instrumentalities, combinations, and methods described in the specification.

### BRIEF DESCRIPTION OF THE DRAWINGS

A further understanding of the nature and advantages of the present invention may be realized by reference to the remaining portions of the specification and the drawings wherein like reference numerals are used throughout the several drawings to refer to similar components. In some instances, a sublabel is associated with a reference numeral and follows a hyphen to denote one of multiple similar components. When reference is made to a reference numeral without specification to an existing sublabel, it is intended to refer to all such multiple similar components.
Fig. 1 is a flowchart showing selected steps in a method of making fiber-resin compositions according to embodiments of the invention;
Fig. 2 is a flowchart showing selected steps in a method of making a fiber-reinforced article according to embodiments of the invention;
Fig. 3 shows an exemplary system for making fiber-resin compounds and fiber-reinforced articles according to embodiments of the invention; and
Fig. 4 shows a exeplary fiber-reinfornced article made according to the present methods.

### DETAILED DESCRIPTION OF THE INVENTION

The present application includes methods of making exemplary fiber-resin compositions from reactive resin compositions that include low-viscosity melts of monomers and oligomers that can polymerize into a thermoplastic resin that holds the adjacent fibers. The low-viscosity reactive resin compositions are significantly easier to wet and mix with the fibers in an extruder compared to a melt of the polymerized thermoplastic resin. The fiber-resin compositions extruded from the extruder may be formed into a fiber-reinforced composite article using a variety of thermoplastic molding techniques. Details about the methods and systems used to make the exemplary fiber-reinforced compositions are described below.

### Exemplary Methods of Making Fiber-Resin Compositions

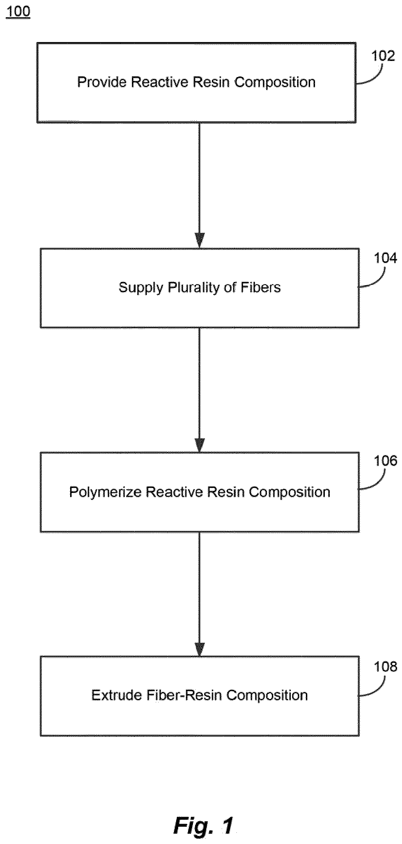

Fig. 1 is a flowchart showing an exemplary method 100 of making the fiber-resin compositions. The method 100 may include providing a reactive resin compostion to an extruder 102. The reactive resin composition may include at least one type of monomer or oligomer capable of polymerizing into a thermoplastic resin. The method 100 may also include combining the reactive resin composition with a plurality of fibers that are also supplied to the extruder 104. Inside the extruder, monomers and oligomers in the reactive resin composition may undergo an *in situ* polymerization to form a thermoplastic resin in contact with the fibers 106. A fiber-resin composition that includes the fibers combined with the thermoplastic resin may be extruded from the extruder 108.

The extruder configuration and extrusion technique may be selected based on the size and type of fibers combined with the reactive resin composition in the extruder. For example, when the plurality of fibers are chopped, short glass fibers (e.g., less than 12.7 mm (less than 0.5 inches in length) a reactive extrusion technique may be used to produce the fiber-resin composition. When the plurality of fibers are glass rovings and/or continuous glass fibers, a direct-long fiber thermoplastic (D-LFT) extrusion technique may be used to produce the fiber-resin composition. Additional details about each of these extrusion techniques are provided as follows:

### Exemplary Reactive Extrusion Techniques

Reactive extrusion is a low-cost, versatile extrusion technique that involves the use of an extruder as a chemical reactor. Polymerization and other chemical reactions associated with reactive resins are carried out *in situ* while the extrusion process, including mixing of the reactive resin composition with fibers and other reinforcement material, is in progress. Therefore, reactive extrusion differs from conventional extrusion methods in which typically no polymerization or other chemical reactions occur during extrusion.

A reactive extrusion process may start by supplying short glass fibers and the reactive resin composition to the extruder. Once inside the extruder, the fibers and reactive resin composition mix under conditions that promote the *in-situ* polymerizaton of the monomers and oligomers in the composition. The low melt viscosity of monomers and oligomers of the reactive resin composition facilitates excellent mixing and wetting of the composition with the plurality of fibers, resulting in improved mechanical properties of composites.

When the short glass fibers have been sized with additional reactive compounds such as polymerization agents and/or coupling agents, the conditions in the extruder also promote the reaction of the fibers with the monomers and oligomers, nascent thermoplastic resin, or both. For example, a polymerization initiator and/or polymerization catalyst on the fibers may initiate and/or promote polymerization of the monomers and oligomers and increase the polymerization rate. A coupling agent may covalently bond the thermoplastic resin to the fibers, improving the mechanical properties of the fiber-reinforced article made with the reactively extruded fiber-resin composition. In some examples, the function of a polymerization agent and coupling agent may be combined into a single compound, such as a coupler-initiator (CI) compound.

### Exemplary Long Fiber Thermoplastic Extrusion Techniques

Direct long fiber thermoplastic (D-LFT) molding is a technology where thermoplastic resin is directly compounded with long glass fibers and then molded in one operation. Different from a conventional extrusion process in which chopped fibers are used, in a D-LFT process continuous roving strands are fed into extruder. The advantage of D-LFT is the ability to produce significantly longer glass fibers in the final composite materials. In comparison to a standard LFT process based on long fiber pellets, the D-LFT process doesn't produce semi-finished material. When D-LFT is used in compression or injection molding, a melted resin-fiber composition may be transferred into a molding tool located in a compression press or directly injected into the mold.

Additional LFT processes may form pellets as a fiber-resin composition. The pellets have a typical length of 12.7 to 50.8 mm (0.5 to 2 inches) and are produced by impregnating in a cross head tie. The reactive resin composition may be combined with fibers typically at the end of an extruder and then further polymerized by applying heat prior to the chopping step. The pellets are semi-finished materials that can be molded in a separate step, such as a compression step using a plasticator or in injection molding.

In both LFT and D-LFT processes the resulting composites contain longer glass fibers of 1/2" (12 mm) up to 2" (50 mm) in length. Longer fiber length combined with excellent wet-out can provide improved mechanical properties such as higher stiffness and strength compared to short fiber-reinforced composites made in a conventional extrusion process using chopped fibers. Long-fiber reinforced thermoplastic composites produced in LFT and D-LFT processes are of great interest to many industries including automotive, due to their excellent mechanical properties and high stiffness-to-weight ratio.

### Exemplary Fibers

The fibers may be one or more types of fibers chosen from glass fibers, ceramic fibers, carbon fibers, metal fibers, and organic polymer fibers, among other kinds of fibers. Exemplary glass fibers may include "E-glass', "A-glass", "C-glass", "S-glass", "ECR-glass" (corrosion resistant glass), "T-glass", and fluorine and/or boron-free derivatives thereof. Exemplary ceramic fibers may include aluminum oxide, silicon carbide, silicon nitride, silicon carbide, and basalt fibers, among others. Exemplary carbon fibers may include graphite, semi-crystalline carbon, and carbon nano tubes, among other types of carbon fibers. Exemplary metal fibers may include aluminum, steel, and tungsten, among other types of metal fibers. Exemplary organic polymer fibers may include poly aramid fibers, polyester fibers, and polyamide fibers, among other types of organic polymer fibers.

The fiber length may range from short-to-intermediate chopped fibers (e.g., about 0.5 inches or less in length) to long fibers (e.g., more than about 0.5 inches in length), including continuous fibers, rovings, and wound fibers, among others. In some instances, the plurality of fibers may be treated with a sizing composition that can enhance the fibers' physical characteristics in a number of ways including increased hardness, increased mechanical strength, greater wettability, and increased adhesion between the fibers and resin. The sizing composition may also enhance the chemical reactivity of the fibers by providing them with reactive agents that initiate and/or promote the polymerization of the resin composition that comes in contact with the "reactive" fibers. The reactive agents may include coupler-initiator compounds that include a silicon-containing moiety that forms a covalent bond with an exposed surface of the glass fiber, and an initiator moiety that initiates a polymerization reaction in the resin composition that comes in contact with the coupler-initiator compound bound to the glass fiber. In some examples, this initiator moiety is a caprolactam blocked isocyanate moiety that initiates a ring-opening polymerization reaction when the reactive fibers come in contact with caprolactam monomers in the resin composition. Exemplary reactive glass fibers are described in co-assigned U.S. Patent App. Nos. 13/335,690; 13/335,761; 13/335,793; and 13/335,813, all filed December 22, 2011, and U.S. Pat. App. No. 13/788,857, filed March 7, 2013.

### Exemplary Reactive Resin Compositions

The method 100 may include providing a reactive resin compostion to an extruder 102. The reactive resin composition include monomers and oligomers capable of polymerizing into a polymerized resin matrix that binds the plurality of fibers. Exemplary reactive resin compositions include caprolactam. Caprolactam is a cyclic amide of caproic acid with an emperical formula (CH₂)₅C(O)NH, which may be represented by the structural formula:

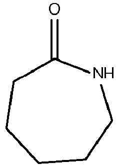

Caprolactam has a low melting point of approximately 68°C and a melted viscosity (4-8 cP) that is close to water, making it well suited for wetting and mixing with glass fibers in an extruder. Typically, the caprolactam-containing reactive resin composition may be introduced to the plurality of fibers as a liquid melt.

Caprolactam-containing reactive resin compositions may also include polymerization agents such as a caprolactam polymerization catalyst. Exemplary catalysts may include a salt of a lactam, and the salt may be an alkali metal salt, an alkali-earth metal salt, and/or a Grignard salt of the caprolactam. For example the polymerization catalyst may be an alkali metal salt of caprolactam, such as sodium caprolactam. In another example, the polymerization catalyst may be a Grignard salt of the caprolactam, such as a magnesium bromide salt of the caprolactam. As noted in the discussion of reactive glass fibers above, polymerization agents may also be present on the fibers, and in some instances a polymerization agent may be present in both the reactive resin composition and on the fibers. Incorporating a polymerization agent on the reactive glass fibers can reduce or eliminate its presence in the reactive resin composition, which may increase the pot-life of the reactive resin composition prior to being applied to the fibers.

Exemplary reactive resin compositions may also include additional type of lactam compounds, such as laurolactam, a cyclic amide where the heterocyclic ring includes 12 carbon atoms (C₁₂H₂₃NO).

Exemplary reactive resin compositions also include oligomers of a cyclic alkylene terephthalate, such as cyclic butylene terephthalate (CBT). An exemplary CBT, whose ring includes two butylene groups and two terephthalate groups, is illustrated below:

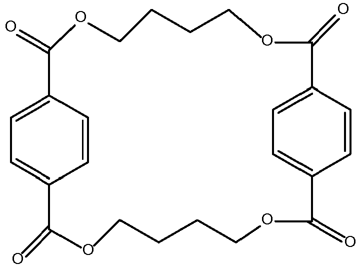

It should be appreciated that the present CBT may include additional butyl and/or terephthalate groups incorporated into the ring. It should also be appreciated that some exemplary CBT may have other moieties coupled to the CBT ring. CBT may comprise a plurality of dimers, trimers, tetramers, etc., of butylene terephthalate.

CBT resins are typically solids at room temperature (e.g., about 20°C), and begin to melt at around 120°C. At around 160°C, CBTs are generally fully melted with a liquid viscosity of about 150 mPas (150 centipoise (cP)) As the molten CBTs are heated further, the viscosity may continue to drop, and in some instances may reach about 30 mPas (30 cP) at about 190°C. The CBT oligomers may be selected to have a melting temperature range of, for example, 120-190°C.

CBT-containing reactive resin compositions may be introduced to the plurality of fibers as a melt. The reactive resin composition may include additional compounds such as polymerization catalysts, polymerization promoters, thickeners, dispersants, colorants, surfactants, flame retardants, ultraviolet stabilizers, and fillers including inorganic particles and carbon nanotubes, among other additional compounds. When the resin particles are oligomers of a CBT, the polymerization catalyst is selected to drive the polymerization of these types of macrocyclic oligoesters. Exemplary polymerization catalysts may include organometallic compounds such as organo-tin compounds and/or organo-titanate compounds. One specific polymerization catalyst for the CBT monomers and oligomers may be butyltin chloride dihydroxide.

The CBT-containing reactive resin composition may also include a polymerization promoter that accelerates the polymerization rate of the monomers and/or oligomers. When the resin particles include CBT, the polymerization promoter may by an alcohol and/or epoxide compound. Exemplary alcohols may include one or more hydroxyl groups, such as mono-alcohols (e.g., butanol), diols (e.g., ethylene glycol, 2-ethyl-1,3-hexanediol, bis(4-hydroxybutyl)terephthalate), triols, and other polyols. Exemplary epoxides may include one or more epoxide groups such as monoepoxide, diepoxide, and higher epoxides, such as bisphenol A diglycidylether. They may also include polyol and polyepoxides, such as poly(ethylene glycol).

### Exemplary Reactive Resin Combinations

The reactive resin compositions include both caprolactam and CBT. In some examples, the combination of monomers/oligomers may be selected to form a melt suspension of higher melting point monomers/oligomers in a liquid medium made from a lower melting point monomer/oligomer. For example, a combination of caprolactam and CBT may be selected with CBT monomer/oligomers having melting points significantly above the melting point of caprolactam. When this reactive resin combination is heated above the melting point of the caprolactam it forms a liquid medium in which the CBT particles are suspended. The application of this reactive resin suspension on a glass fiber substrate can create an inhomogeneous distribution of the two types of monomers/oligomers in the resin-fiber mixture.

Additional reactive resin compositions include combinations of first and second resin systems having different polymerization temperatures. This may allow the formation of a semi-reactive fiber-resin composition that contains a polymerized resin of the first resin system having a lower polymerization temperature, while also containing unpolymerized monomers/oligomers of the second resin system having a higher polymerization temperature. For example, a reactive resin combination of caprolactam and CBT may be selected such that the CBT has a higher polymerization temperature than the caprolactam. Alternatively, a reactive resin combination can be formulated of two different types of cyclic alkylene terephthalates and/or a bimodal molecular weight distribution of CBT oligomers having different polymerization temperatures.

### Exemplary Methods of Making Fiber-Reinforced Composite Articles

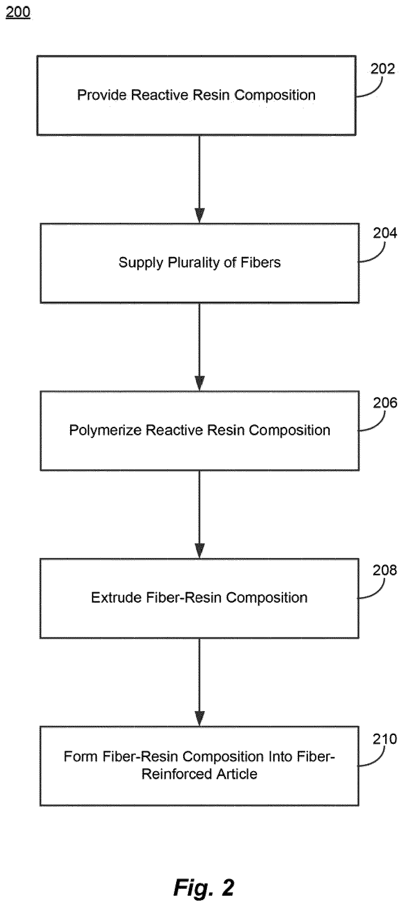

Fig. 2 is a flowchart showing an exemplary method 200 of making the fiber-reinforced composite articles. The method 200 may include providing a reactive resin compostion to an extruder 202. The reactive resin composition may include at least one type of monomer or oligomer capable of polymerizing into a thermoplastic resin. The method 200 may also include combining the reactive resin composition with a plurality of fibers that are also supplied to the extruder 204. The monomers and oligomers in the reactive resin composition provided to the extruder may undergo an *in situ* polymerization to form a thermoplastic resin in contact with the fibers 206. The combination of the thermoplastic resin and fibers may be extruded from the extruder as a fiber-resin composition 208. The fiber-resin composition may then be formed into the fiber-reinforced composite article 210 by incorporating them into the article.

Exemplary techniques for forming the fiber-resin composition into the fiber-reinforced composite articles may include injection molding and/or compression molding of the composition into the fiber-reinforced article. When the fiber-resin composition includes pre-polymerized and/or partially-polymerized resin, the article fabrication process may include a heating step (e.g., hot pressing) to fully polymerize the resin. Heat may also be used in the compression molding of a fully-polymerized fiber-resin composition to maintain the flowability of the composition as it is filling a mold or otherwise forming a shape of the final article.

As noted above, examples of the present fiber-resin compositions include a thermoplastic resin of polymerized PA-6 and unpolymerized or partially polymerized CBT. The pre-polymerized or partially polymerized CBT can be converted to PBT and form a fully-polymerized fiber-reinforced article under isothermal processing conditions.

### Exemplary Composition and Article Fabrication Systems

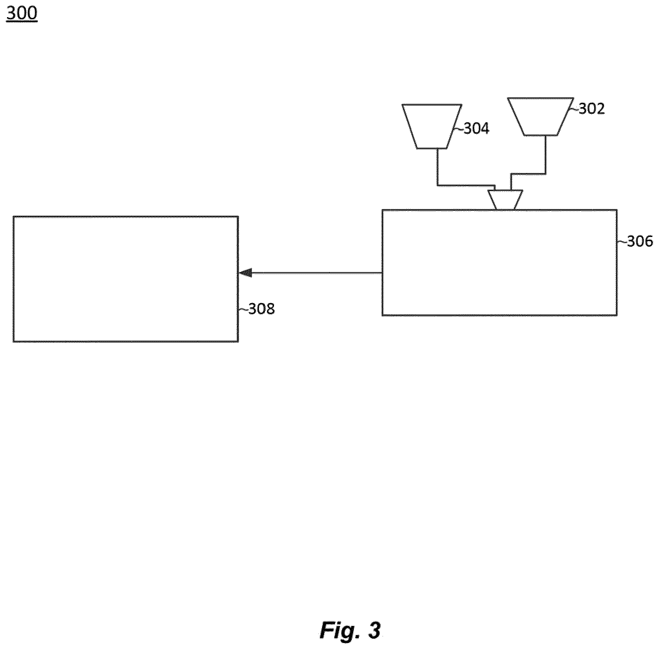

Fig. 3 shows an exemplary system 300 for making the present fiber-resin compounds and fiber-reinforced articles. The system 300 includes a supply of a reactive resin composition 302, and a supply of fibers 304 that can be fed to an extruder 306. As noted above, systems 300 may be configured to accept short fibers (e.g., short-chopped glass fibers), or continuous fibers. When the system 300 is configured to accept short fibers, the extruder 306 is configured to conduct a reactive extrusion process to form the fiber-resin composition. Alternatively when the system 300 is configured to accept continuous fibers, extruder 306 is configured to conduct a LFT or D-LFT process to form the fiber-resin composition.

The fiber-resin composition extruded by the extruder 306 may be directly supplied to a molding machine 308 that forms the composition into the fiber-reinforced composite article. Exemplary molding machines 308 may include injection molding machines, and compression molding machines, among other types of molding machines. A heated conduit (not shown) may be used to maintain the fiber-resin composition in a molten/liquid state as it is transported from the extruder 306 to the molding machine 308. Alternatively, the fiber-resin composition may be cooling or cooled as it moves from the extruder 306 to the molding machine 308.

### Exemplary Fiber-Reinforced Composite Articles

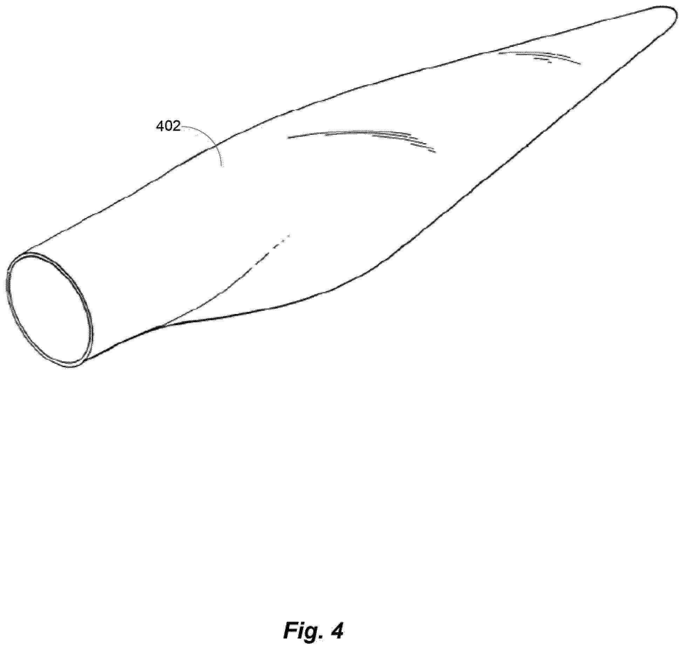

Fig. 4 shows an exemplary fiber-reinforced composite wind turbine blade 402 formed by the present technologies. The blade 402 is one of many types of articles that can be formed by the present technologies. Other articles may include vehicle parts (e.g., aircraft parts, automotive parts, etc.), appliance parts, containers, etc.

Where a range of values is provided, it is understood that each intervening value, to the tenth of the unit of the lower limit unless the context clearly dictates otherwise, between the upper and lower limits of that range is also specifically disclosed. Each smaller range between any stated value or intervening value in a stated range and any other stated or intervening value in that stated range is encompassed. The upper and lower limits of these smaller ranges may independently be included or excluded in the range, and each range where either, neither or both limits are included in the smaller ranges is also encompassed within the invention, subject to any specifically excluded limit in the stated range. Where the stated range includes one or both of the limits, ranges excluding either or both of those included limits are also included.

As used herein and in the appended claims, the singular forms "a", "an", and "the" include plural referents unless the context clearly dictates otherwise. Thus, for example, reference to "a process" includes a plurality of such processes and reference to "the fiber" includes reference to one or more fibers and equivalents thereof known to those skilled in the art, and so forth.

Also, the words "comprise," "comprising," "include," "including," and "includes" when used in this specification and in the following claims are intended to specify the presence of stated features, integers, components, or steps, but they do not preclude the presence or addition of one or more other features, integers, components, steps, acts, or groups.

## Claims

1. A method of making a fiber-resin composition, the method comprising:
(i) providing a reactive resin composition to an extruder, wherein the reactive resin composition comprises (i) monomers and (ii) oligomers capable of polymerizing into a thermoplastic resin matrix;
(ii) combining the reactive resin composition with a plurality of reactive fibers that are also supplied to the extruder, wherein the plurality of reactive fibers are sized with at least one of a polymerization agent and a coupling agent; and
(iii) extruding the fiber-resin composition from the extruder, wherein the monomers and oligomers polymerize to form a thermoplastic resin in contact with the plurality of fibers in the extruded fiber-resin composition,
wherein the reactive resin composition comprises caprolactam monomers and cyclic butylene terephthalate (CBT) oligomers, and the thermoplastic resin matrix comprises polyamide-6 and polybutylene terephthalate (PBT).

2. The method of claim 1, wherein the plurality of fibers are chosen from un-chopped glass fibers, long glass fibers, continuous glass fibers, and glass rovings, preferably the long glass fibers have a length of 1.27 cm (0.5 inches) or more.

3. The method of claim 2, wherein the reactive resin composition and the plurality of reactive fibers are combined in a long fiber thermoplastic extrusion process or a direct-long fiber thermoplastic extrusion process.

4. The method of claim 1, wherein the plurality of fibers are chosen from chopped glass fibers, and short glass fibers, preferably the short glass fibers have a length of 1.27 cm (0.5 inches) or less.

5. The method of claim 4, wherein the reactive resin composition and the plurality of reactive fibers are combined in a reactive extrusion process in the extruder.

6. The method of claim 1, wherein the polymerization agent comprises a polymerization catalyst.

7. The method of claim 1, wherein the coupling agent is a coupler-initiator compound comprising an initiator moiety that initiates polymerization of the reactive resin composition, and a coupling moiety that covalently bonds the thermoplastic resin to the plurality of fibers.

8. A method of making a fiber-reinforced composite article, the method comprising:
(i) providing a reactive resin composition to an extruder, wherein the reactive resin composition comprises (i) monomers and (ii) oligomers capable of polymerizing into a thermoplastic resin matrix;
(ii) combining the reactive resin composition with a plurality of reactive fibers that are also supplied to the extruder, wherein the plurality of reactive fibers are sized with at least one of a polymerization agent and a coupling agent;
(iii) extruding a fiber-resin composition from the extruder, wherein the (i) monomers and (ii) oligomers polymerize to form a thermoplastic resin matrix in contact with the plurality of fibers in the extruded fiber-resin composition; and
(iv) forming the fiber-resin composition into the fiber-reinforced composite article,
wherein the reactive resin composition comprises caprolactam monomers and cyclic butylene terephthalate (CBT) oligomers, and the thermoplastic resin matrix comprises polyamide-6 and polybutylene terephthalate (PBT).

9. The method of claim 8, wherein the plurality of fibers are chosen from un-chopped glass fibers, long glass fibers, continuous glass fibers, and glass rovings, and the reactive resin composition and the plurality of reactive fibers are combined in a long fiber thermoplastic extrusion process or a direct-long fiber thermoplastic extrusion process.

10. The method of claim 8, wherein the plurality of fibers are chosen from chopped glass fibers and short glass fibers, and the reactive resin composition and the plurality of reactive fibers are combined in a reactive extrusion process.

11. The method of claim 1 or 8, wherein the polymerization agent comprises a polymerization catalyst and the coupling agent comprises a coupler-initiator compound.

12. The method of claim 1 or 8, wherein the at least one of the polymerization agent and the coupling agent present on the plurality of fibers is not present in the reactive resin composition.

13. The method of claim 8, wherein the at least one of the polymerization agent and the coupling agent present on the plurality of fibers is also present in the reactive resin composition.

14. The method of claim 8, wherein the forming of the fiber-resin composition into the fiber-reinforced composite article comprises injection molding or compression molding the fiber-resin composition into the fiber-reinforced composite article.

15. The method of claim 8, wherein the fiber-reinforced article comprises a vehicle part or a turbine blade.

## Patentansprüche

1. Verfahren zum Herstellen einer Faser-Harz-Zusammensetzung, wobei das Verfahren umfasst:
(i) Zuführen einer reaktiven Harzzusammensetzung in einen Extruder, wobei die reaktive Harzzusammensetzung (i) Monomere und (ii) Oligomere umfasst, die in der Lage sind, zu einer thermoplastischen Harzmatrix zu polymerisieren;
(ii) Kombinieren der reaktiven Harzzusammensetzung mit einer Vielzahl von reaktiven Fasern, die ebenfalls dem Extruder zugeführt werden, wobei die Vielzahl von reaktiven Fasern mit einem Polymerisationsmittel und/oder einem Verbindungsmittel geschlichtet sind; und
(iii) Extrudieren der Faser-Harz-Zusammensetzung aus dem Extruder, wobei die Monomere und Oligomere unter Bildung eines thermoplastischen Harzes in Kontakt mit der Vielzahl von Fasern in der extrudierten Faser-Harz-Zusammensetzung polymerisieren,
wobei die reaktive Harzzusammensetzung Caprolactam-Monomere und Oligomere von cyclischem Butylenterephthalat (CBT) umfasst und die thermoplastische Harzmatrix Polyamid-6 und Polybutylenterephthalat (PBT) umfasst.

2. Verfahren nach Anspruch 1, wobei die Vielzahl von Fasern aus ungeschnittenen Glasfasern, langen Glasfasern, kontinuierlichen Glasfasern und Glasrovings ausgewählt ist, wobei die langen Glasfasern vorzugsweise eine Länge von 1,27 cm (0,5 Zoll) oder mehr aufweisen.

3. Verfahren nach Anspruch 2, wobei die reaktive Harzzusammensetzung und die Vielzahl von reaktiven Fasern in einem thermoplastischen Langfaser-Extrusionsverfahren oder einem thermoplastischen Langfaser-Direktextrusionsverfahren kombiniert werden.

4. Verfahren nach Anspruch 1, wobei die Vielzahl von Fasern aus geschnittenen Glasfasern und kurzen Glasfasern ausgewählt ist, wobei die kurzen Glasfasern vorzugsweise eine Länge von 1,27 cm (0,5 Zoll) oder weniger aufweisen.

5. Verfahren nach Anspruch 4, wobei die reaktive Harzzusammensetzung und die Vielzahl von reaktiven Fasern in einem reaktiven Extrusionsverfahren in dem Extruder kombiniert werden.

6. Verfahren nach Anspruch 1, wobei das Polymerisationsmittel einen Polymerisationskatalysator umfasst.

7. Verfahren nach Anspruch 1, wobei es sich bei dem Verbindungsmittel um eine Verbinder-Initiator-Verbindung handelt, umfassend eine Initiatoreinheit, welche die Polymerisation der reaktiven Harzzusammensetzung initiiert, und eine Verbindungseinheit, die das thermoplastische Harz kovalent an die Vielzahl von Fasern bindet.

8. Verfahren zum Herstellen eines faserverstärkten Verbundgegenstands, wobei das Verfahren umfasst:
(i) Zuführen einer reaktiven Harzzusammensetzung in einen Extruder, wobei die reaktive Harzzusammensetzung (i) Monomere und (ii) Oligomere umfasst, die in der Lage sind, zu einer thermoplastischen Harzmatrix zu polymerisieren;
(ii) Kombinieren der reaktiven Harzzusammensetzung mit einer Vielzahl von reaktiven Fasern, die ebenfalls dem Extruder zugeführt werden, wobei die Vielzahl von reaktiven Fasern mit einem Polymerisationsmittel und/oder einem Verbindungsmittel geschlichtet sind;
(iii) Extrudieren einer Faser-Harz-Zusammensetzung aus dem Extruder, wobei die (i) Monomere und (ii) Oligomere unter Bildung einer thermoplastischen Harzmatrix in Kontakt mit der Vielzahl von Fasern in der extrudierten Faser-Harz-Zusammensetzung polymerisieren; und
(iv) Formen der Faser-Harz-Zusammensetzung zu dem faserverstärkten Verbundgegenstand,
wobei die reaktive Harzzusammensetzung Caprolactam-Monomere und Oligomere von cyclischem Butylenterephthalat (CBT) umfasst und die thermoplastische Harzmatrix Polyamid-6 und Polybutylenterephthalat (PBT) umfasst.

9. Verfahren nach Anspruch 8, wobei die Vielzahl von Fasern aus ungeschnittenen Glasfasern, langen Glasfasern, kontinuierlichen Glasfasern und Glasrovings ausgewählt ist und die reaktive Harzzusammensetzung und die Vielzahl von reaktiven Fasern in einem thermoplastischen Langfaser-Extrusionsverfahren oder einem thermoplastischen Langfaser-Direktextrusionsverfahren kombiniert werden.

10. Verfahren nach Anspruch 8, wobei die Vielzahl von Fasern aus geschnittenen Glasfasern und kurzen Glasfasern ausgewählt ist und die reaktive Harzzusammensetzung und die Vielzahl von reaktiven Fasern in einem reaktiven Extrusionsverfahren kombiniert werden.

11. Verfahren nach Anspruch 1 oder 8, wobei das Polymerisationsmittel einen Polymerisationskatalysator umfasst und das Verbindungsmittel eine Verbinder-Initiator-Verbindung umfasst.

12. Verfahren nach Anspruch 1 oder 8, wobei das auf der Vielzahl von Fasern vorhandene Polymerisationsmittel und/oder Verbindungsmittel nicht in der reaktiven Harzzusammensetzung vorhanden ist.

13. Verfahren nach Anspruch 8, wobei das auf der Vielzahl von Fasern vorhandene Polymerisationsmittel und/oder Verbindungsmittel auch in der reaktiven Harzzusammensetzung vorhanden ist.

14. Verfahren nach Anspruch 8, wobei das Formen der Faser-Harz-Zusammensetzung zu dem faserverstärkten Verbundgegenstand Spritzgießen oder Formpressen der Faser-Harz-Zusammensetzung zu dem faserverstärkten Verbundgegenstand umfasst.

15. Verfahren nach Anspruch 8, wobei der faserverstärkte Gegenstand ein Fahrzeugteil oder eine Turbinenschaufel umfasst.

## Revendications

1. Procédé de fabrication une composition à fibres - résine, le procédé comprenant:
(i) pourvoir une composition de résine réactive à une extrudeuse, où la composition de résine réactive comprend (i) des monomères et (ii) des oligomères capables de polymériser dans une matrice en résine thermoplastique;
(ii) combiner la composition de résine réactive avec une pluralité de fibres réactives qui sont aussi fournies à l'extrudeuse, où la pluralité de fibres réactives sont encollées avec au moins l'un d'entre un agent de polymérisation et un agent de couplage;
(iii) extruder la composition à fibres-résine de l'extrudeuse, où les monomères et les oligomères polymérisent pour former une résine thermoplastique en contact avec la pluralité de fibres dans la composition à fibres-résine extrudée,
où la composition de résine réactive comprend les monomères de caprolactame et les oligomères cycliques de butylène-téréphtalate (CBT), et la matrice en résine thermoplastique comprend le polyamide-6 et le polybutylène téréphtalate (PBT).

2. Procédé selon la revendication 1, où la pluralité de fibres sont choisies d'entre les fibres de verre non coupées, les fibres de verre longues, les fibres de verre continues, les stratifils de verre, préférablement les fibres de verre longues ayant une longueur de 1,27 cm (0,5 pouces) ou plus.

3. Procédé selon la revendication 2, où la composition de résine réactive et la pluralité de fibres réactives sont combinées dans un procédé d'extrusion thermoplastique de fibres longues ou un procédé direct d'extrusion thermoplastique de fibres longues.

4. Procédé selon la revendication 1, où la pluralité de fibres sont choisies d'entre les fibres de verre coupées, et les fibres de verre courtes, préférablement les fibres de verre courtes ont une longueur de 1,27 cm (0,5 pouces) ou moins.

5. Procédé selon la revendication 4, où la composition de résine réactive et la pluralité de fibres réactives sont combinées dans un procédé d'extrusion réactive dans l'extrudeuse.

6. Procédé selon la revendication 1, où l'agent de polymérisation comprend un catalyseur de polymérisation.

7. Procédé selon la revendication 1, où l'agent de couplage est un composé coupleur-initiateur comprenant une fraction initiatrice qui initie la polymérisation de la composition de résine réactive, et une fraction de couplage qui lie de manière covalente la résine thermoplastique à la pluralité de fibres.

8. Procédé de fabrication un composite à fibres renforcées, le procédé comprenant:
(i) pourvoir une composition de résine réactive à une extrudeuse, où la composition de résine réactive comprend (i) des monomères et (ii) des oligomères capables de polymériser dans une matrice en résine thermoplastique;
(ii) combiner la composition de résine réactive avec une pluralité de fibres réactives qui sont aussi fournies à l'extrudeuse, ou la pluralité de fibres réactives sont encollées avec au moins l'un d'entre un agent de polymérisation et un agent de couplage;
(iii) extruder la composition à fibres-résine de l'extrudeuse, où (i) les monomères et (ii) les oligomères polymérisent pour former une matrice en résine thermoplastique en contact avec la pluralité de fibres dans la composition à fibres-résine extrudée, et
(iv) former la composition à fibres-résine dans le composite à fibres renforcées,
où la composition de résine réactive comprend les monomères de caprolactame et les oligomères cycliques de butylène-téréphtalate (CBT), et la matrice en résine thermoplastique comprend le polyamide-6 et le polybutylène téréphtalate (PBT).

9. Procédé selon la revendication 8, où la pluralité de fibres sont choisies d'entre les fibres de verre non coupées, les fibres de verre longues, les fibres de verre continues, et les stratifils de verre, et la composition de résine réactive et la pluralité de fibres réactives sont combinées dans un procédé d'extrusion thermoplastique de fibres longues ou un procédé direct d'extrusion thermoplastique de fibres longues.

10. Procédé selon la revendication 8, où la pluralité de fibres sont choisies d'entre les fibres de verre coupées et les fibres de verre courtes, et la composition de résine réactive et la pluralité de fibres réactives sont combinées dans un procédé d'extrusion réactive.

11. Procédé selon la revendication 1 ou 8, où l'agent de polymérisation comprend un catalyseur de polymérisation et l'agent de couplage comprend un composé coupleur-initiateur.

12. Procédé selon la revendication 1 ou 8, où au moins l'un d'entre l'agent de polymérisation et l'agent de couplage présent sur la pluralité de fibres n'est pas présent dans la composition de résine réactive.

13. Procédé selon la revendication 8, où au moins l'un d'entre l'agent de polymérisation et l'agent de couplage présent sur la pluralité de fibres est aussi présent dans la composition de résine réactive.

14. Procédé selon la revendication 8, où la formation de la composition à fibres-résine dans le composite à fibres renforcées comprend le moulage par injection ou le moulage par compression de la composition à fibres-résine dans le composite à fibres renforcées.

15. Procédé selon la revendication 8, où l'article à fibres renforcées comprend une partie de véhicule ou une lame de turbine.
